# EUROPÄISCHE PATENTSCHRIFT

(11) **EP 1 166 293 B1**
(45) Veröffentlichungstag und Bekanntmachung des Hinweises auf die Patenterteilung: **18.05.2005**
(21) Anmeldenummer: 00925034.1
(22) Anmeldetag: 08.03.2000
(51) Int. Cl.: H01F 7/02

(54) **VERBUNDTEIL UND VERFAHREN ZU DESSEN HERSTELLUNG**
COMPOSITE PART AND METHOD FOR PRODUCING THE SAME
PIECE COMPOSITE ET SON PROCEDE DE PRODUCTION

(30) Priorität: 19.03.1999 DE 19912470
(43) Veröffentlichungstag der Anmeldung: 02.01.2002
(73) Patentinhaber: Vacuumschmelze GmbH, 63450 Hanau (DE)
(72) Erfinder: REPPEL, Georg-Werner, D-63546 Hammersbach (DE); ZELLMANN, Volker, D-63589 Linsengericht (DE)
(74) Vertreter: Schmuckermaier, Bernhard
(86) Internationale Anmeldenummer: PCT/DE2000/000726
(87) Internationale Veröffentlichungsnummer: WO 2000/057436

(56) Entgegenhaltungen:
- PATENT ABSTRACTS OF JAPAN vol. 012, no. 150 (E-606), 10. Mai 1988 (1988-05-10) & JP 62 264609 A (SEIKO EPSON CORP), 17. November 1987 (1987-11-17)
- PATENT ABSTRACTS OF JAPAN vol. 007, no. 133 (M-221), 10. Juni 1983 (1983-06-10) & JP 58 048608 A (TOUHOKU KINZOKU KOGYO KK), 22. März 1983 (1983-03-22)

## Beschreibung

Die Erfindung betrifft ein Verfahren zur Herstellung von Verbundteilen, bei dem ein Magnetkörper aus einer an Seltener Erde reichen Legierung mit einem weichmagnetischen Trägerkörper entlang einer Grenzfläche verbunden wird.

Die Erfindung betrifft ferner ein Verbundteil mit einem Magnetkörper auf der Basis einer an Seltener Erde reichen Legierung und einem weichmagnetischen Trägerkörper.

Das Dokument Patent Abstracts of Japan, Vol. 012, no. 150 (E-606), 10. Mai 1998 und JP62264609 A (Seiko Epson Corp.) zeigt zwei zusammengesteckte zylindrische Teile, von denen eines aus einem weich magnetischen Material und das andere aus einem hartmagnetischen Material besteht. Die beiden Teile werden nach dem Zusammenstecken gemeinsam gesintert. Ob es sich dabei um ein Flüssigphasensintern handelt, wird nicht erwähnt. Desgleichen gibt es keinerlei Hinweise auf die Beschaffenheit der Grenzfläche nach Sintern und Wärmebehandlung.

Verbundteile werden beispielsweise in Elektromotoren als Rotoren oder Statoren verwendet. Dabei dient der weichmagnetische Trägerkörper als magnetischer Rückschluß für den Magnetkörper. Zur Herstellung dieser Verbundteile wird zunächst ein Magnetkörper aus einem Pulver auf der Basis einer an Seltenen Erden reichen Legierung gepreßt und daraufhin gesintert. Diese Magnetkörper zeigen aufgrund des großen Volumenschwundes während der Sinterung eine schlechte Maßhaltigkeit, so daß sie nach dem Sintern auf Maß geschliffen werden müssen. Nach dem Schleifen werden die Magnetkörper mit den weichmagnetischen Trägerkörpern verklebt und zu Rotoren oder Statoren eines Elektromotors zusammengefügt.

Ein Nachteil des bekannten Verbundteils und des bekannten Verfahrens ist, daß für das Abschleifen der Magnetkörper ein entsprechendes Aufmaß vorgehalten werden muß. Beim Abschleifen dieses Aufmaßes entsteht eine große Menge an Abfall. Demnach wird also teures Material verschwendet. Außerdem bereitet der Schleifabfall Entsorgungsprobleme. Hinzu kommt, daß die Magnete wegen ihres Verzuges vorsortiert werden müssen, um die Schleifkosten in Grenzen zu halten. Darum bestimmen, insbesondere wenn mehrere Flächen geschliffen werden müssen, die Schleifkosten zu einem großen Teil die Magnetkosten.

Ausgehend von diesem Stand der Technik liegt der Erfindung die Aufgabe zugrunde, ein maßhaltiges Verbundteil hoher Festigkeit aus einem Magnetkörper und einem weichmagnetischen Trägerkörper zu schaffen und ein einfaches und kostengünstiges Verfahren zu dessen Herstellung anzugeben.

Diese Aufgabe wird erfindungsgemäß dadurch gelöst, daß sich eine entlang einer Grenzfläche ausgebildete schmelzflüssige Phase vom Magnetkörper in den Trägerkörper erstreckt.

Weiterhin wird diese Aufgabe erfindungsgemäß durch ein Verfahren mit den folgenden Verfahrensschritten gelöst:
a) der Trägerkörper und der Magnetkörper werden aus Pulver geformt;
b) durch eine Wärmebehandlung wird im Bereich der Grenzfläche eine schmelzflüssige Phase ausgebildet, die während der Wärmebehandlung in den Trägerkörper eindringt.

Die Herstellung des Trägerkörpers auf pulvermetallurgischem Weg führt dazu, daß der Trägerkörper entlang der Grenzfläche eine Vielzahl von Poren und Kanälen aufweist, in die während der Wärmebehandlung die im Bereich der Grenzfläche vorhandene schmelzflüssige Phase eintreten kann. Durch die in den Magnetkörper eingedrungene schmelzflüssige Phase wird der Magnetkörper nach dem Abkühlen auf wirksame Weise im Trägerkörper verankert. Die Verankerung des Magnetkörpers im Trägerkörper ist dabei so stark, daß die Verbindung des Trägerkörpers mit dem Magnetkörper trotz unterschiedlicher Wärmeausdehnungskoeffizienten beim Abkühlen nach dem gemeinsamen Sintern erhalten bleibt. Da bezüglich der Geometrie des Trägerkörpers zahlreiche Gestaltungsmöglichkeiten bestehen und da eine hohe Maßgenauigkeit des Verbundteils gemäß der Erfindung gegeben ist, können die erfindungsgemäß hergestellten Verbundteile sofort nach der Wärmebehandlung ohne weitere Schleifvorgänge durch Stecken oder Klammern zu komplexen elektromechanischen Komponenten zusammengebaut werden.

Weitere Ausführungsformen und vorteilhafte Ausgestaltungen der Erfindung sind in den abhängigen Ansprüchen angegeben.

Nachfolgend werden Ausführungsbeispiele der Erfindung näher anhand der beigefügten Zeichnung erläutert. Es zeigen:
- Figur 1: eine schematische Darstellung eines Verfahrensablaufs;
- Figur 2: einen Schnitt durch eine Grenzfläche zwischen einem Magnetkörper und einem Trägerkörper;
- Figur 3: ein Diagramm, in dem die prozentuale Längenänderung eines Magnetkörpers auf der Basis von NdFeB und eines Trägerkörpers aus Fe aufgetragen ist;
- Figur 4: ein Diagramm, in dem die relative Längenänderung des Magnetkörpers auf der Basis von NdFeB und eines Trägerkörpers aus Fe gegen die Temperatur aufgetragen ist.

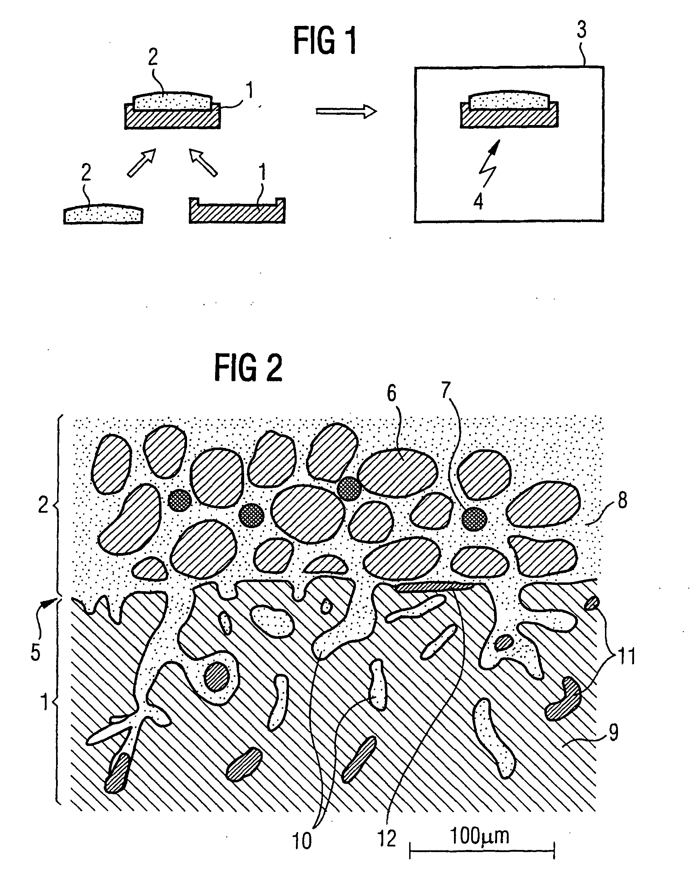

Figur 1 zeigt eine schematische Darstellung eines möglichen Verfahrensablaufs. Ein weichmagnetischer Trägerkörper 1 wird aus einem Eisenpulver gepreßt und anschließend gesintert. Weiterhin wird ein an Seltenen Erden reicher Magnetkörper 2 aus einem Pulver, beispielsweise auf der Basis einer NdFeB-Legierung gepreßt. Während des Pressens wird ein äußeres Magnetfeld angelegt, um im Magnetkörper 2 eine magnetische Vorzugsrichtung auszubilden. Der Magnetkörper 2 wird auf den Trägerkörper 1 gelegt und beide Körper in einem Ofen 3 zu einem Verbundteil 4 gemeinsam gesintert. Es ist jedoch auch möglich, den Trägerkörper 1 und den Magnetkörper 2 in einem gemeinsamen Preßvorgang zu formen und anschließend gemeinsam zu sintern. Beide Vorgehensweisen werden nachfolgend kurz als Lötsintern bezeichnet.

Figur 2 zeigt einen Schnitt durch eine Grenzfläche 5 zwischen dem Trägerkörper 1 und dem Magnetkörper 2 des Verbundteils 4 nach dem Lötsintern. Der Magnetkörper 2 ist aus hartmagnetischen Körnern 6 der Zusammensetzung Nd₂Fe₁₄B und aus Nd-Fe-Boriden 7 zusammengesetzt, zwischen denen sich eine Nd-reiche Phase 8 befindet, die bei Temperaturen oberhalb von etwa 650°C in den schmelzflüssigen Zustand übergeht. Derartige Legierungen werden auch kurz als Legierungen auf der Basis von NdFeB bezeichnet.

Der aus Eisenpulver gepreßte und gesinterte Trägerkörper 1 weist neben massiven Bereichen 9 Porenkanäle 10 auf, die nach dem Lötsintern teilweise mit der Nd-reichen Phase 8 des Magnetkörpers 2 gefüllt sind. Neben den mit der Nd-reichen Phase 8 gefüllten Porenkanälen 10 sind Hohlräume 11 vorhanden, die von der Nd-reichen Phase 8 nicht gefüllt worden sind. Außerdem können auch einzelne Risse 12 vorhanden sein.

Dadurch, daß die Nd-reiche Phase 8 in die Porenkanäle 10 des Trägerkörpers 1 eindringt, wird der Magnetkörper 2 auf wirksame Weise im Trägerkörper 1 verankert. Die Verbindung ist dabei derart fest, daß trotz des unterschiedlichen Sinterverhaltens und einer unterschiedlichen thermischen Ausdehnung der beiden Werkstoffe die Verbindung während der Wärmebehandlung nicht aufbricht.

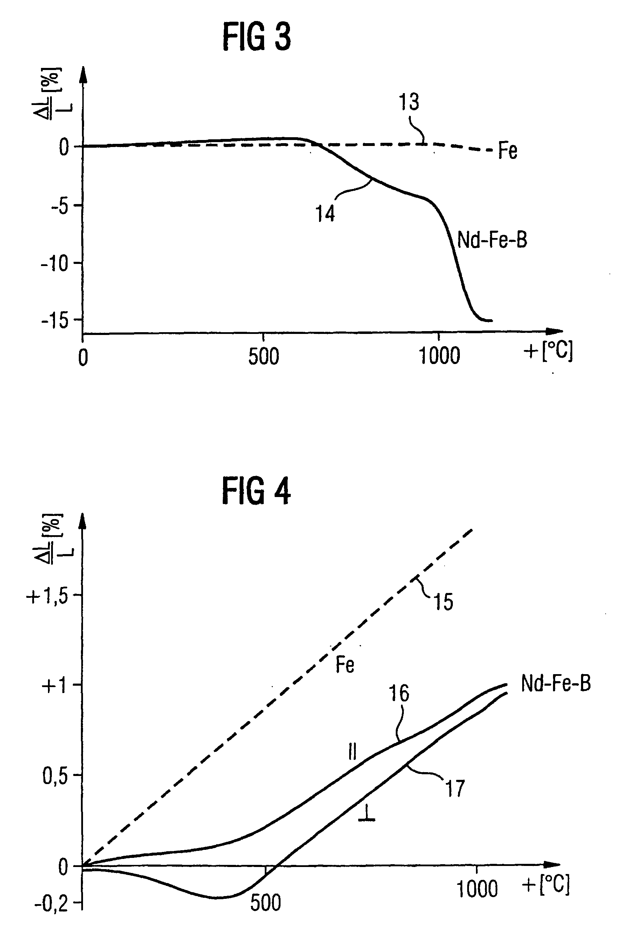

Figur 3 stellt mit einer gestrichelten Linie 13 die prozentuale Längenänderung eines aus Eisenpulver hergestellten Trägerkörpers 1 sowie mit einer durchgezogenen Linie 14 die prozentuale Längenänderung eines auf der Basis einer NdFeB-Legierung hergestellten Magnetkörpers 2 in Abhängigkeit von der Sintertemperatur dar. Dieser Zusammenhang ist während der Aufheizphase beim Sintern von Bedeutung. Bei einer Sintertemperatur von 1120°C in reduzierender Atmosphäre beträgt der Schwund des Trägerkörpers 1 aus Eisen nur 0,1 %. Bei einer NdFeB-Legierung dagegen beträgt der Schwund typischerweise 12 % senkrecht zur magnetischen Vorzugsrichtung und 22 % parallel zur magnetischen Vorzugsrichtung, was über die drei Raumrichtungen gemittelt einem Schwund von 15,4 % entspricht. Die lineare Änderung der Abmessungen aufgrund des Volumenschwunds des Magnetkörpers 2 wird offenbar dadurch möglich, daß der Magnetkörper 2 bei den während des Lötsinterns herrschenden hohen Temperaturen annähernd frei auf einem See aus schmelzflüssiger Phase gleiten kann.

Wesentlich schwerwiegender ist das in Figur 4 dargestellte unterschiedliche Dehnungsverhalten bei Temperaturänderungen, beispielsweise in der Abkühlphase eines Verbundkörpers mit einem Magnetkörper auf der Basis von NdFeB und einem Magnetkörper aus Fe. In Figur 4 deutet die gestrichelte Linie 15 die relative Längenänderung des Trägerkörpers 1 in Abhängigkeit von der Temperatur an. Die durchgezogene Kurve 16 in Figur 4 beschreibt das Ausdehnungsverhalten des Magnetkörpers 2 aus NdFeB parallel zur magnetischen Vorzugsrichtung, während die durchgezogene Linie 17 das Ausdehnungsverhalten des Magnetkörpers 2 aus NdFeB-Legierung rechtwinklig zur magnetischen Vorzugsrichtung beschreibt. Aus Figur 4 geht hervor, daß sich der Trägerkörper 1 in etwa linear mit steigender Temperatur ausdehnt, wohingegen sich der aus einer NdFeB-Legierung hergestellte Magnetkörper 2 in Richtung quer zur magnetischen Vorzugsrichtung bis zu einer Temperatur von etwa 375°C zusammenzieht, um sich dann bei höheren Temperaturen wieder auszudehnen. Nur parallel zur magnetischen Vorzugsrichtung dehnt sich der aus einer NdFeB-Legierung hergestellte Magnetkörper 2 kontinuierlich aus. Unterhalb einer Temperatur von 500°C jedoch ist die Wärmeausdehnung des aus NdFeB hergestellten Magnetkörpers 2 wesentlich schwächer als die Ausdehnung des aus einem Eisenpulver hergestellten Trägerkörpers 1. Daß die Verbindung zwischen dem Trägerkörper 1 und dem Magnetkörper 2 trotz dieses unterschiedlichen Ausdehnungsverhaltens beim Abkühlen nicht aufgebrochen wird, ist für sich genommen bereits ein Beleg für die Güte der mit diesem Verfahren erzielbaren Fügung zwischen dem Trägerkörper 1 und dem Magnetkörper 2. Möglicherweise können die beim Abkühlen des Verbundteils 4 auftretenden Spannungen durch plastische Verformungen im Eisen des Trägerkörpers 2 aufgefangen werden.

Trotz der sehr unterschiedlichen Werkstoffeigenschaften gelingt ein fester Verbund zwischen Magnetkörper 2 und weichmagnetischem Trägerkörper 1, sofern an der Grenzfläche 5 eine ausreichende Menge an schmelzflüssiger Phase bereitgestellt wird, die sich mit dem Trägerkörper 1 verbindet. Dies kann einmal durch entsprechende Änderung der Legierungszusammensetzung des Magnetkörpers 2 geschehen, wodurch die Menge an schmelzflüssiger Phase erhöht wird. Eine andere Möglichkeit ist die Aufbringung eines speziellen Lotwerkstoffs auf die Grenzfläche vor der Sinterung des Magnetkörpers 2.

In den nachfolgend näher beschriebenen Ausführungsbeispielen werden gute dauermagnetische und weichmagnetische Eigenschaften erreicht. Die durch gemeinsame Wärmebehandlung erzielten Verbundteile 4 sind so maßhaltig, daß im allgemeinen keine Nachbearbeitung erforderlich ist. Dies ist umso überraschender, als Flüssig-Phasen-gesinterte Formteile, wie z.B. Formteile auf der Basis von NdFeB, nach Sintern einen hohen Verzug aufweisen, während bei üblichen pulvermetallurgischen . Formteilen auf Eisen-Basis, bei der gleichen Temperatur gesintert, noch die sehr genauen Preßtoleranzen erhalten bleiben. Bei gemeinsamer Sinterung des Magnetkörpers 2 auf dem weichmagnetischen Trägerkörper 1 tritt jedoch kein oder nur noch unbedeutender Verzug des Magnetkörpers 2 auf, so daß eine mechanische Bearbeitung des Verbundteils 4 entfallen kann. Die Montage der Verbundteile 4 wird vereinfacht und erspart dadurch gegenüber der bisherigen Technik Kosten.

Die Herstellung der Verbundteile 4 wird nun anhand der folgenden Ausführungsbeispiele beschrieben:

Den nachfolgend beschriebenen Beispielen ist gemeinsam, daß zunächst aus reinem Eisenpulver mit Teilchen mit einem mittleren Durchmesser von 100 µm Trägerkörper 1 mit Abmessungen von 22,3 x 6,9 x 4 mm gepreßt wurden. Die so geformten Trägerkörper 1 wurden anschließend in einer reduzierenden H₂/N₂-Atmosphäre bei 1120°C gesintert. Die Preß- und Sinterdichten lagen zwischen 6,32 und 7,13 g/cm³, je nach gewähltem Preßdruck. Das entspricht 80,5 % und 91 % der theoretischen Dichte von Eisen.

Den nachfolgenden Beispielen ist ferner gemeinsam, daß die Lötsinterung bei Temperaturen zwischen 1080 und 1145°C durchgeführt wurde, wobei sich hohe Sintertemperaturen als tendenziell günstiger herausgestellt haben.

### Beispiel 1:

Ein NdFeB-Pulver mit 30,5% Seltenen Erden wird mit 3% eines Neodymhydrid-Pulvers (NdH₂) gemischt, im Magnetfeld orientiert und zu einem quaderförmigen Magnetkörper 2 gepreßt. Anschließend wird der Preßling auf einen gesinterten Trägerkörper 1 gleicher Größe aus Eisen der Dichte 6,95 g/cm³ gesetzt. Anschließend erfolgt die Sinterung des Verbundkörpers in der für den Magnetkörper 2 üblichen Weise unter Vakuum und Edelgas bei 1100°C während 1h. Nach diesem Lötsintern war der Magnetkörper 2 je nach Orientierung der magnetischen Vorzugsrichtung um 10 bis 25 % geschwunden, während der Trägerkörper 1 aus Reineisen maßlich unverändert blieb. Der Magnetkörper 2 hatte sich geometrisch dem Trägerkörper 1 angepaßt und war mit ihm über eine Zwischenschicht aus Seltener Erde und Eisen eine feste Verbindung mit hoher Scherfestigkeit eingegangen. Da der Magnetkörper 2 bezüglich der Dicke, die der Vorzugsrichtung entspricht, keinen Verzug erfuhr, war die Dicke des Verbundteils 4 mit einer Toleranz von ungefähr ±0,1 mm oder sogar ±0,05 mm gegeben, so daß auf ein Schleifen verzichtet werden konnte.

Es sei angemerkt, daß in herkömmlichen Verfahren gesinterte Magnete wegen des Sinterverzugs ein Aufmaß von ungefähr 0,5 mm erfordern, was etwa 20 % der Dicke entspricht. Dieses Aufmaß muß anschließend durch Schleifen auf Enddicke entfernt werden.

### Beispiel 2:

Wie Beispiel 1, jedoch mit 1% NdH₂-Seltenerd-Zusatz.

### Beispiel 3:

Wie Beispiel 1, jedoch mit 5% NdH₂-Seltenerd-Zusatz.

### Beispiel 4:

Wie Beispiel 1, jedoch mit 10% NdH₂-Seltenerd-Zusatz

### Beispiel 5:

Vergleichsbeispiel: wie Beispiel 1, jedoch ohne Seltenerdzusatz

Die Festigkeit der Verbindung zwischen dem Magnetkörper 2 und dem Trägerkörper 1 aus Fe wurde durch Aufschlagen auf eine Steinplatte getestet.

Es wurde die Anzahl fest verbundener Teile von je 10 Verbundteilen beurteilt.

Die Ergebnisse sind in Tabelle zusammengestellt.

**Tabelle 1**

| Beispiel | Erhöhter SE-Zusatz (%) | Nd-reiche Phase bei Raumtemp.ca. (%) | Anzahl verbundener Teile nach Sintern | Anzahl verbundener Teile nach Aufschlagen |
|---|---|---|---|---|
| 1 | 3 | 5 | 8 | 6 |
| 2 | 1 | 3 | 3 | 1 |
| 3 | 5 | 7 | 10 | 9 |
| 4 | 10 | 12 | 10 | 10 |
| 5 | 0 | 2 | 1 | 0 |

Mit erhöhtem Seltenerd-Gehalt nimmt die Menge an schmelzflüssiger Phase beim Sintern und damit die Güte der Verbindung zu. Die Menge der Seltenerd-reichen Phase kann über verschiedene schmelz- und pulvermetallurgische Maßnahmen gesteuert werden; der Zusatz eines Seltenerd-reichen Pulvers ist nur eine Möglichkeit. In den nachfolgenden Beispielen werden weitere Möglichkeiten genannt.

Zur Untersuchung der magnetischen Eigenschaften wurde ein Verbundteil 4 aufgetrennt und der Magnetkörper 2, dem bei der Herstellung 5 Gew% NdH₂ zugesetzt worden ist, in einem Permagraph vermessen. Die Remanenz von 0,96 T liegt aufgrund der größeren Konzentration von Nd um 2 bis 3 % niedriger als die Remanenz von auf herkömmliche Weise hergestellten NdFeB-Magneten ohne erhöhten Seltenerd-Gehalt.

Die Koerzitivfeldstärke lag bei dem vermessenen Magnetkörper 2 oberhalb von 16 kA/cm. Gegenüber der Leigerung ohne Zusatz ergab sich eine geringe Verbesserung der Koenzitivfeldstärke.

Der Trägerkörper 1 aus Eisen weist im Ausgangszustand eine Koerzitivfeldstärke von 1,05 A/cm auf. Nach dem Lötsintern beträgt die Koerzitivfeldstärke 1,52 A/cm.

### Beispiel 6:

Wie Beispiel 1: Zusätzlich wird der gepreßte Magnetkörper 2 mit einer Dispersion von NdH₂-Pulver in Ethanol bepinselt, bevor er auf den Trägerkörper 1 aus Fe gesetzt wird. Eine nicht vollständige Entmagnetisierung des Magnetkörpers 2 ist hilfreich für das Fügen der beiden Körper. Nach Sintern waren 9 von 10 Teilen nach dem Test durch Aufschlagen fest untereinander verbunden.

### Beispiel 7:

Ein gesinterter Trägerkörper 1 aus Fe wird in das Preßwerkzeug gelegt, mit Nd-Fe-B-Pulver, dem 5% NdH₂-Pulver zugemischt wurde, überfüllt. Nach Orientierung des Pulvers werden die beiden Materialien gemeinsam verpreßt. Das auf diese Weise hergestellte Verbundteil 4 wurde anschließend bei Temperaturen von 1100°C gesintert. Nach Sintern sind Magnetkörper 2 und Trägerkörper 1 eine innige Verbindung eingegangen. Durch die Nd-reiche schmelzflüssige Phase wurden die Porenkanäle 10 im Trägerkörper 1 bis zu einer Tiefe von 0,5 bis 1 mm mit der Nd-reichen, bei Sintertemperaturen schmelzflüssigen Phase 8 des Magnetkörpers 2 gefüllt. Dadurch entstand im Magnetkörper 2 zwar eine 50 µm breite Nd-arme Zone, die die magnetischen Eigenschaften des Magnetkörpers 2 jedoch nicht beeinträchtigt.

Bei diesen Proben ist die mechanische Verklammerung zwischen dem Magnetkörper 2 und dem Trägerkörper 1 bereits nach dem Pressen so stark, daß sich nach dem Lötsintern ein Verzug und ein trapezförmiger Querschnitt des Magnetkörpers 2 ergibt.

Dafür ist die Festigkeit der Fügung außerordentlich hoch. Dies zeigt sich darin, daß häufig Risse 12 im Magnetkörper 2 auftreten. Offenbar ist die Verbindung zwischen dem Magnetkörper 2 und dem Trägerkörper 1 so gut, daß die aufgrund der Unterschiede in der thermischen Ausdehnung auftretenden Spannungen eher zu einem Riß im Magnetkörper 2 als in der Zwischenschicht führen.

### Beispiel 8:;

Eisenpulver wird in das Werkzeug eingefüllt und mit einem Preßdruck von 3 t/cm² vorgepreßt. Anschließend wird mit Nd-Fe-B-Pulver überfüllt. Nach Orientierung des Pulvers werden die beiden Materialien gemeinsam mit 4 t/cm² verpreßt. Nach Sintern sind Magnetkörper 2 und Trägerkörper 1 eine innige Verbindung eingegangen.

Diese Versuche zeigen, daß für eine Fügung mit hoher Scherfestigkeit ein signifikanter Überschuß an Seltener Erde im Bereich der Grenzfläche wesentlich ist.

### Beispiele 9 bis 11:

Aus NdFeB-Pulver wurden unter Anwesenheit eines äußeren Magnetfeldes Magnetkörper 2 gepreßt. Anschließend wurde auf die Grenzfläche 5 ein Lot aufgebracht und der Trägerkörper 1 und der Magnetkörper 2 bei 1100°C gesintert. Als Lot wurde insbesondere eine 1 mm dicke Scheibe aus Nd-Metall, Nd-Späne sowie NdH₂-Feinpulver verwendet.

Bei diesen Versuchen ergaben sich ebenfalls feste Verbindungen zwischen dem Trägerkörper 1 und dem Magnetkörper 2.

### Beispiel 12:

Wie Beispiel 1: Zusätzlich wird zwischen Magnetkörper 2 und Trägerkörper 1 eine Aluminiumfolie gelegt. Nach Sintern waren 5 von 10 Verbundteilen 4 nach dem Test durch Aufschlagen fest untereinander verbunden. Al erhöht die Menge an schmelzflüssiger Phase während des Sinterns und ermöglicht so die Verbindung der beiden Werkstoffe. Durch Al werden außerdem weder die weichmagnetischen Eigenschaften des Trägerkörpers 1 noch die magnetischen Eigenschaften des Magnetkörpers 2 wesentlich beeinträchtigt.

### Beispiel 13 bis 16:

Wie im vorhergehenden Beispiel, anstelle der Al-Folie wird jedoch jeweils Al-Pulver, Ferro-Bor-Pulver, Silber-Pulver und NdFeB-Pulver mit einem Seltenerd-Gehalt von 42% vor der gemeinsamen Sinterung auf den Trägerkörper 1 gepudert. In allen Fällen wird die Verbindung zwischen Magnetkörper 2 und Trägerkörper 1 verbessert.

### Beispiel 17:

Auf einen schalenförmigen Trägerkörper 1 aus Sintereisen wird Carbonyleisenpulver der Teilchengröße 3 µm gestreut. Ein ebenfalls schalenförmiger gepreßter Magnetkörper 2 aus einer Dauermagnetlegierung des Typs Sm₂(Cu, Zr, Fe, Co)₁₇ wird auf diese Eisenpulverschicht gesetzt und das Verbundteil 4 bei 1210°C unter Vakuum gesintert. Nach Wärmebehandlung und Abkühlung ist der Magnetträger 2 mit dem Trägerkörper 1 aus Fe fest verbunden.

### Beispiel 18:

Vergleichsbeispiel, wie Beispiel 17, jedoch ohne Fe-Pulver-Zwischenschicht. Nach Sintern und leichtem Aufschlagen auf eine Unterlagen waren die beiden Körper getrennt.

Sm₂(Cu, Zr, Fe, Co)₁₇ ist ebenfalls ein Flüssig-Phasengesinterter Werkstoff. Das in der Zwischenschicht verwendete Eisenpulver diffundiert in den Magnetwerkstoff und erhöht die Menge an schmelzflüssiger Phase während der Sinterung.

Abschließend sei angemerkt, daß anstelle von Reineisen für den Trägerkörper 1 auch weitere Eisenlegierungen in Frage kommen, die bei einer Herstellung auf pulvermetallurgischem Weg eine ausreichende Porosität aufweisen. Beispielsweise kommen auch Eisen-Phosphor-Legierungen mit einem Gewichtsanteil von Phosphor < 1 %, Eisen-Nickel-Legierungen mit einem Gewichtsanteil von Nickel < 85 %, Eisen-Kobalt-Legierungen mit einem Gewichtsanteil von Kobalt < 55 % sowie Eisen-Silizium-Legierungen mit einem Gewichtsanteil von Silizium < 7 % in Frage.

Weiterhin sei angemerkt, daß anstelle des Magnetkörpers 2 aus NdFeB auch andere Seltene-Erden-haltige Legierungen in Frage kommen. Beispielsweise kann Nd durch weitere Seltene Erden wie Pr oder Dy, Eisen durch andere Übergangsmetalle wie Co oder Ni ersetzt werden.

## Patentansprüche

1. Verfahren zur Herstellung von Verbundteilen (4), bei dem ein Magnetkörper (2) aus einer an Seltener Erde reichen Legierung entlang einer Grenzfläche (5) mit einem weichmagnetischen Trägerkörper (1) verbunden wird,
**gekennzeichnet durch**
die folgenden Verfahrensschritte:
a) der Trägerkörper (1) und der Magnetkörper (2) werden aus Pulver geformt;
b) **durch** eine Wärmebehandlung wird im Bereich der Grenzfläche (5) eine schmelzflüssige Phase (8) ausgebildet, die während der Wärmebehandlung in den Trägerkörper (1) eindringt.

2. Verfahren nach Anspruch 1,
**dadurch gekennzeichnet,**
**daß** der Trägerkörper (1) aus Pulver auf der Basis einer weichmagnetischen Eisenlegierung gepreßt und gesintert wird.

3. Verfahren nach Anspruch 1,
**dadurch gekennzeichnet,**
**daß** der Trägerkörper (1) aus reinem Eisenpulver gepreßt und gesintert wird.

4. Verfahren nach einem der Ansprüche 1 bis 3,
**dadurch gekennzeichnet,**
**daß** der Magnetkörper (2) aus einer Legierung auf NdFeB-Basis hergestellt wird.

5. Verfahren nach Anspruch 4,
**dadurch gekennzeichnet,**
**daß** der Anteil an Seltenderd-reicher Phase ohne die hartmagnetische Phase vom Typ Nd₂F₁₄B im Dauermagneten mindestens 3% beträgt.

6. Verfahren nach Anspruch 4,
**dadurch gekennzeichnet,**
**daß** der erhöhte Anteil an Seltenerd-reicher Phase durch Zumischen eines Pulvers mit mindestens 35 Gew.% Seltenerdanteil erreicht wird.

7. Verfahren nach Anspruch 6,
**dadurch gekennzeichnet,**
**daß** die Wärmebehandlung des Verbundteils (4) gleichzeitig mit der Sinterung des Magnetkörpers (2) erfolgt.

8. Verfahren nach einem der Ansprüche 1 bis 7,
**dadurch gekennzeichnet,**
**daß** vor der Wärmebehandlung entlang der Grenzfläche (5) ein Lot mit einem Schmelzpunkt unterhalb der Wärmebehandlungstemperatur aufgebracht wird.

9. Verfahren nach Anspruch 8,
**dadurch gekennzeichnet,**
**daß** das Lot in Form eines Pulvers mit mindestens 35 Gew.% Seltenen Erden auf die Grenzfläche (5) aufgebracht wird.

10. Verfahren nach Anspruch 8,
**dadurch gekennzeichnet,**
**daß** das Lot in Form einer Folie, deren Schmelzpunkt unterhalb der Wärmebehandlungstemperatur liegt, auf die Grenzfläche (5) aufgebracht wird.

11. Verfahren nach einem der Ansprüche 1 bis 7,
**dadurch gekennzeichnet,**
**daß** der Magnetkörper (2) und Trägerkörper (1) gemeinsam gepreßt werden.

12. Verfahren nach einem der Ansprüche 1 bis 3,
**dadurch gekennzeichnet,**
**daß** der Magnetkörper (2) aus einer Legierung auf Basis Sm₂(Cu, Zr, Fe, Co)₁₇ hergestellt wird.

13. Verfahren nach Anspruch 12,
**dadurch gekennzeichnet,**
**daß** ein Lot in Form eines Pulvers mit mindestens 50 Gew.% Eisen auf die Grenzfläche (5) aufgebracht wird.

14. Verbundteil mit einem Magnetkörper (2) auf der Basis einer an Seltener Erde reichen Legierung und einem weichmagnetischen Trägerkörper (1),
**dadurch gekennzeichnet,**
**daß** sich eine entlang einer Grenzfläche ausgebildete schmelzflüssige Phase vom Magnetkörper (2) in den Trägerkörper (1) erstreckt.

## Claims

1. Method for producing composite parts (4), in which a magnetic body (2) made of an alloy rich in rare earths is bonded along a boundary surface (5) with a soft-magnetic support body (1), **characterized by** the following method steps:
a) the support body (1) and the magnetic body (2) are moulded from powder;
b) a heat treatment is used in the region of the boundary surface (5) to form a molten phase (8), which penetrates into the support body (1) during the heat treatment.

2. Method according to Claim 1, **characterized in that** the support body (1) is compacted and sintered from powder based on a soft-magnetic iron alloy.

3. Method according to Claim 1, **characterized in that** the support body (1) is compacted and sintered from pure iron powder.

4. Method according to one of Claims 1 to 3, **characterized in that** the magnetic body (2) is produced from an alloy based on NdFeB.

5. Method according to Claim 4, **characterized in that** the proportion of the permanent magnet that is made up by the phase rich in rare earths without the hard-magnetic phase of the Nd₂F₁₄B type is at least 3%.

6. Method according to Claim 4, **characterized in that** the increased proportion of the phase rich in rare earths is achieved by admixing a powder with a proportion of rare earths of at least 35% by weight.

7. Method according to Claim 6, **characterized in that** the heat treatment of the composite part (4) takes place simultaneously with the sintering of the magnetic body (2).

8. Method according to one of Claims 1 to 7, **characterized in that** a solder with a melting point below the heat treatment temperature is applied along the boundary surface (5) before the heat treatment.

9. Method according to Claim 8, **characterized in that** the solder is applied to the boundary surface (5) in the form of a powder with at least 35% by weight of rare earths.

10. Method according to Claim 8, **characterized in that** the solder is applied to the boundary surface (5) in the form of a film with a melting point which lies below the heat treatment temperature.

11. Method according to one of Claims 1 to 7, **characterized in that** the magnetic body (2) and the support body (1) are compacted jointly.

12. Method according to one of Claims 1 to 3, **characterized in that** the magnetic body (2) is produced from an alloy based on Sm₂(Cu, Zr, Fe, Co)₁₇.

13. Method according to Claim 12, **characterized in that** a solder in the form of a powder with at least 50% by weight of iron is applied to the boundary surface (5).

14. Composite part with a magnetic body (2) based on an alloy rich in rare earths and a soft-magnetic support body (1), **characterized in that** a molten phase of the magnetic body (2) formed along a boundary surface extends into the support body (1).

## Revendications

1. Procédé de fabrication de pièces composites (4), en reliant un corps magnétique (2) en alliage riche en terres rares, le long d'une surface limite (5), à un corps de support magnétique doux (1),
**caractérisé par**
les étapes suivantes :
a) le corps de support (1) et le corps magnétique (2) sont formés à partir d'une poudre, et
b) par un traitement thermique, on réalise dans la zone de la surface limite (5) une phase de fusion complète (8) qui pénètre dans le corps de support (1) pendant le traitement thermique.

2. Procédé selon la revendication 1,
**caractérisé en ce que**
le corps de support (1) est pressé et fritté à partir de poudre à base d'un alliage de fer magnétique doux.

3. Procédé selon la revendication 1,
**caractérisé en ce que**
le corps de support (1) est pressé et fritté à partir de pure poudre de fer.

4. Procédé selon l'une quelconque des revendications 1 à 3,
**caractérisé en ce que**
le corps magnétique (2) est fabriqué en un alliage à base de NdFeB.

5. Procédé selon la revendication 4,
**caractérisé en ce que**
la proportion de la phase riche en terre rare sans la phase magnétique dure du type Nd₂F₁₄B dans l'aimant permanent est d'au moins 3 %.

6. Procédé selon la revendication 4,
**caractérisé en ce que**
la proportion accrue de la phase riche en terre rare est obtenue par mélange additionnel d'une poudre ayant une proportion de terre rare d'au moins 35 % en poids.

7. Procédé selon la revendication 6,
**caractérisé en ce que**
le traitement thermique de la pièce composite (4) est effectué en même temps que le frittage du corps magnétique (2).

8. Procédé selon l'une quelconque des revendications 1 à 7,
**caractérisé en ce qu'**
avant le traitement thermique, un métal d'apport de brasage ayant un point de fusion inférieur à la température du traitement thermique est appliqué le long de la surface limite (5).

9. Procédé selon la revendication 8,
**caractérisé en ce que**
le métal d'apport de brasage est appliqué sur la surface limite (5) sous forme d'une poudre ayant au moins 35 % en poids de terres rares.

10. Procédé selon la revendication 8,
**caractérisé en ce que**
le métal d'apport de brasage est appliqué sur la surface limite (5) sous forme d'une feuille dont le point de fusion se situe en dessous de la température du traitement thermique.

11. Procédé selon l'une quelconque des revendications 1 à 7,
**caractérisé en ce que**
le corps magnétique (2) et le corps de support (1) sont pressés ensemble.

12. Procédé selon l'une quelconque des revendications 1 à 3,
**caractérisé en ce que**
le corps magnétique (2) est fabriqué en un alliage à base de Sm₂ (Cu, Zr, Fe, Co)₁₇.

13. Procédé selon la revendication 12,
**caractérisé en ce qu'**
un métal d'apport de brasage sous forme d'une poudre ayant au moins 50 % en poids de fer est appliqué sur la surface limite (5).

14. Pièce composite comportant un corps magnétique (2) à base d'un alliage riche en terre rare et un corps de support magnétique doux (1),
**caractérisée en ce qu'**
une phase de fusion complète du corps magnétique (2), formée le long d'une surface limite, s'étend dans le corps de support (1).
